# FASCICULE DE BREVET EUROPEEN

(11) **EP 3 250 841 B1**
(45) Date de publication et mention de la délivrance du brevet: **12.06.2019**
(21) Numéro de dépôt: 16701331.7
(22) Date de dépôt: 22.01.2016
(51) Int. Cl.: F16H 57/00, F16F 3/02, F16F 15/133, F16F 15/131

(54) **DISPOSITIF D'AMORTISSEMENT DES VIBRATIONS POUR UNE CHAINE DE TRANSMISSION DE VEHICULE AUTOMOBILE**
VORRICHTUNG ZUR SCHWINGUNGSDÄMPFUNG FÜR EIN ANTRIEBSSTRANG EINES KRAFTFAHRZEUGS
DEVICE FOR DAMPENING VIBRATIONS FOR A DRIVE TRAIN OF AN AUTOMOTIVE VEHICLE

(30) Priorité: 29.01.2015 FR 1550672
(43) Date de publication de la demande: 06.12.2017
(73) Titulaire: Valeo Embrayages, 80009 Amiens Cedex 2 (FR)
(72) Inventeur: DUTIER, Ivan, 80260 Rainneville (FR); BOULET, Jérôme, 60510 Oroer (FR); MAUREL, Hervé, 80000 Amiens (FR)
(74) Mandataire: Cardon, Nicolas
(86) Numéro de dépôt international: PCT/EP2016/051321
(87) Numéro de publication internationale: WO 2016/120162

(56) Documents cités:
- FR-A1- 2 764 958
- FR-A1- 3 008 152

## Description

### Domaine technique

L'invention se rapporte au domaine des dispositifs d'amortissement des vibrations, notamment de torsion, destinés à équiper les transmissions de véhicule automobile.

### Arrière-plan technologique

Les transmissions de véhicule automobile sont généralement équipées d'un dispositif d'amortissement permettant de filtrer les vibrations en amont de la boîte de vitesses de manière à éviter des chocs, bruits ou nuisances sonores particulièrement indésirables. De tels dispositifs d'amortissement équipent notamment les doubles volants amortisseurs (DVA) et/ou les frictions d'embrayage, dans le cas d'une transmission manuelle ou robotisée, ou les embrayages de verrouillage, également appelés embrayages « lock-up », équipant les dispositifs d'accouplement hydraulique, dans le cas d'une transmission automatique.

Les dispositifs d'amortissement comportent des moyens élastiques d'amortissement accouplant en rotation un élément d'entrée de couple et un élément de sortie de manière à permettre une transmission du couple et un amortissement des acyclismes de rotation.

Le document FR3000155 divulgue un dispositif d'amortissement dans lequel les moyens élastiques d'amortissement sont formés de deux lames élastiques. Les deux lames élastiques sont montées sur l'un des éléments d'entrée et de sortie du dispositif d'amortissement et coopèrent chacune avec un galet associé monté mobile en rotation sur l'autre des éléments d'entrée et de sortie. Les lames et les galets sont agencés de telle sorte que, pour un débattement angulaire entre l'élément d'entrée et l'élément de sortie, de part et d'autre d'une position angulaire relative de repos, le galet se déplace le long de la lame et, ce faisant, exerce un effort de flexion sur la lame élastique. Par réaction, la lame élastique exerce sur le galet une force de rappel qui tend à ramener les éléments d'entrée et de sortie vers leur position angulaire de repos. La flexion de la lame élastique permet ainsi d'amortir les vibrations et irrégularités de rotation entre l'élément d'entrée et l'élément de sortie tout en assurant la transmission du couple. Le document FR3008152 divulgue un amortisseur de torsion comportant toutes les caractéristiques du préambule de la revendication 1.

Les performances d'un tel dispositif d'amortissement des vibrations dépendent de la raideur angulaire des lames élastiques. En effet, plus la raideur angulaire du dispositif d'amortissement est faible et plus ses performances sont avantageuses. Toutefois, les lames élastiques doivent être suffisamment raides pour permettre une transmission du couple maximum généré par le moteur. Ainsi, afin de permettre une diminution de la raideur angulaire d'un dispositif d'amortissement tout en permettant la transmission du couple maximum généré par le moteur, il convient d'augmenter le débattement angulaire relatif maximum entre les éléments d'entrée et de sortie de couple. Toutefois, compte-tenu des contraintes liées à l'encombrement des lames, le débattement angulaire d'un dispositif d'amortissement tel que décrit dans le document FR3000155 reste limité.

Par ailleurs, le couple transmis entre l'élément d'entrée et l'élément de sortie est repris par les axes de support des galets qui sont susceptibles de se déformer.

Enfin, la courbe de transmission du couple en fonction du débattement angulaire repose uniquement sur le profil de la surface de came portée par la lame et le long de laquelle roule le galet. Or, la forme de la lame est soumise à de nombreuses autres contraintes de conception, tels que l'encombrement et la raideur de la lame, de telle sorte que certaines courbes de transmission du couple en fonction du débattement angulaire ne peuvent être réalisées.

Les performances de filtration d'un dispositif d'amortissement tel que décrit dans le document FR3000155 précité ne sont donc pas pleinement satisfaisantes.

### Résumé

Une idée à la base de l'invention est de proposer un dispositif d'amortissement des vibrations permettant de filtrer efficacement les vibrations, notamment en torsion.

Selon un mode de réalisation, l'invention fournit un dispositif d'amortissement des vibrations pour une chaîne de transmission de véhicule automobile comportant :
- un premier élément et un second élément mobiles, en rotation autour d'un axe de rotation X ; et
- des moyens élastiques d'amortissement accouplant le premier élément et le second élément de manière à permettre une transmission de couple avec amortissement des vibrations, notamment de torsion, entre le premier et le second éléments, cette transmission de couple avec amortissement étant accompagnée d'une rotation relative entre le premier élément et le second élément ; lesdits moyens élastiques d'amortissement comportant au moins une lame élastique montée solidaire en rotation du premier élément ;
le dispositif d'amortissement comportant en outre un corps roulant mobile par rapport au second élément pour pouvoir accomplir un trajet curviligne sur au moins un secteur angulaire (A) prédéterminé, le déplacement curviligne du corps roulant par rapport au second élément étant accompagné d'un déplacement du corps roulant sur la lame élastique en la faisant fléchir.

Ainsi, la mobilité du corps roulant par rapport au second élément permet d'augmenter le débattement angulaire maximal entre le premier et le second élément par rapport à un dispositif d'amortissement selon l'art antérieur équivalent dans lequel le galet coopérant avec la lame élastique est fixé sur l'un des éléments d'entrée ou de sortie. Un tel dispositif d'amortissement permet donc, pour un couple maximum à transmettre déterminé, de diminuer la raideur angulaire ce qui conduit à une augmentation significative des performances de filtration.

De plus, le couple est transmis entre le premier élément et le second élément par l'intermédiaire du corps roulant sans passer par un axe de support susceptible de se déformer. Un tel agencement permet donc de réaliser un dispositif d'amortissement des vibrations particulièrement robuste.

Selon d'autres modes de réalisation avantageux, un tel dispositif d'amortissement peut présenter une ou plusieurs des caractéristiques suivantes :
- le secteur angulaire prédéterminé est supérieur à 20°, notamment supérieur à 40°, ou supérieur à 60° ou 90°.
- le trajet curviligne du corps roulant par rapport au second élément comporte une composante géométrique circonférentielle.
- une première et une seconde pistes de roulement sont respectivement portées par la lame élastique et par le second élément; et le corps roulant est agencé pour se déplacer sur la première et la seconde pistes de roulement pour permettre un débattement angulaire entre le premier élément et le second élément; les première et seconde pistes de roulement étant agencées de telle sorte que, dans une position angulaire relative entre le premier élément et le second élément différente d'une position relative de repos, le corps roulant exerce un effort de flexion sur la lame élastique produisant une force de réaction contraire de la lame élastique sur le corps roulant, cette force de réaction présentant une composante circonférentielle apte à rappeler lesdits premier et second éléments vers ladite position relative de repos.

Ainsi, les distances parcourues par le corps roulant sur la première piste de roulement et sur la seconde piste de roulement sont égales de telle sorte que le débattement angulaire maximal entre le premier et le second élément est sensiblement doublé par rapport à un dispositif d'amortissement selon l'art antérieur équivalent dans lequel le galet coopérant avec la lame élastique serait fixé sur l'un des éléments d'entrée ou de sortie. Un tel dispositif d'amortissement permet donc, pour un couple maximum à transmettre déterminé, de diminuer la raideur angulaire ce qui conduit à une augmentation significative des performances de filtration.

De plus, dans un tel dispositif d'amortissement, la courbe caractéristique, c'est-à-dire la courbe représentant les variations du couple transmis en fonction du débattement angulaire, dépend à la fois de la géométrie de la première piste de roulement et de celle de la seconde piste de roulement alors qu'elle ne dépend que de la géométrie de la came portée par la lame dans un dispositif d'amortissement à lame selon l'art antérieur. Dès lors, un tel agencement est susceptible d'offrir une plus large variété de courbes de transmission du couple en fonction du débattement.

Selon d'autres modes de réalisation avantageux, un tel dispositif d'amortissement peut présenter une ou plusieurs des caractéristiques suivantes :
- les première et seconde pistes de roulement sont respectivement portées par la lame élastique et par le second élément.
- les première et seconde pistes de roulement sont agencées en vis-à-vis.
- le corps roulant est agencé pour se déplacer simultanément sur la première et la seconde pistes de roulement lors d'une rotation relative entre le premier élément et le second élément.
- le corps roulant est agencé pour rouler sur la première et la seconde pistes de roulement lors d'une rotation relative entre le premier élément et le second élément.
- la première piste de roulement est située radialement à l'intérieur de la seconde piste de roulement.
- les première et seconde pistes de roulement sont agencées de telle sorte que, pour une position angulaire relative entre le premier élément et le second élément différente d'une position relative de repos, le corps roulant exerce un effort de flexion sur la lame élastique comportant une composante radiale produisant une force de réaction contraire de la lame élastique comportant une composante radiale dirigée vers l'extérieur apte à maintenir le corps roulant en contact avec la première et la seconde pistes de roulement.
- les premières et seconde pistes de roulement présentent des profils agencés de telle sorte que, lorsque le couple transmis augmente, les corps roulants exercent chacun un effort de flexion sur leur lame élastique respective entraînant un rapprochement de l'extrémité distale libre des lames élastiques vers l'axe X et une rotation relative entre les premier et second éléments telle que les volants primaire et secondaire s'écartent de leur position relative de repos.
- Les profils des pistes de roulement sont donc tels que les corps roulants exercent sur leur lame élastique associée un effort de flexion ayant une composante radiale et une composante circonférentielle.
- Les profils des pistes de roulement sont formés en fonction de la courbe caractéristique d'amortissement souhaitée pour l'amortisseur.
- dans la position relative de repos, la lame élastique est pré-contrainte radialement vers l'axe X de sorte à exercer une force de réaction dirigée radialement vers l'extérieur permettant de maintenir le corps roulant en contact contre la première et la seconde pistes de roulement.
- le second élément comporte des parois latérales bordant la seconde piste de roulement et le corps roulant afin de maintenir ledit corps roulant axialement.
- Le corps roulant est un rouleau cylindrique dont chaque extrémité est équipée d'une protubérance faisant saillie axialement selon l'axe de révolution du rouleau cylindrique.
- L'amortisseur comporte au moins un moyen anti-glissement empêchant le glissement du corps roulant sur les pistes de roulement.
- le moyen anti-glissement est un revêtement en polymère ou élastomère disposé sur la surface roulante du corps roulant.
- Le moyen anti-glissement est un revêtement en polymère ou élastomère disposé sur au moins l'une des première et seconde piste de roulement.
- Le moyen anti-glissement est un joint torique ou un joint de section rectangulaire logé dans une gorge ménagée sur la surface roulante du corps roulant.
- Le moyen anti-glissement est une pâte ou un corps visqueux, par exemple de la graisse, apte à se déposer sur le corps roulant et/ou sur au moins l'une des première et seconde pistes de roulement, cette pâte ou corps visqueux étant intégré à l'intérieur de l'amortisseur.
- Le moyen anti-glissement est une denture ménagée sur au moins l'une des pistes de roulement et sur le corps roulant.
- la première et la seconde pistes de roulement comportent chacune une denture et le corps roulant est un pignon comportant une denture engrenant avec les dentures de la première et de la seconde pistes de roulement.
- les dentures du pignon et de la première et de la seconde pistes de roulement présentent un profil en développante de cercle et présentent un angle de pression compris entre 20 et 40°.
- les dentures du pignon et de la première et de la seconde pistes de roulement sont des dents droites.
- les dentures du pignon et de la première et de la seconde pistes de roulement sont des dentures à chevron.
- la lame élastique comporte une portion de fixation sur le premier élément et une portion élastique comportant un brin interne, un brin externe et une portion coudée reliant le brin interne et le brin externe.
- la lame élastique comporte une portion élastique dont au moins une partie s'étend circonférentiellement autour de l'axe de rotation X, sur une ouverture angulaire d'au moins 20 degrés, notamment d'au moins 45 degrés, de préférence d'au moins 60 degrés, par exemple d'au moins 90 degrés.
- dans un mode de réalisation, la première piste de roulement est ménagée sur une pièce rapportée sur la lame élastique. Dans un autre mode de réalisation, la première piste de roulement est ménagée dans le corps de la lame élastique.
- dans un mode de réalisation, la seconde piste de roulement est ménagée sur une pièce rapportée sur le second élément. Dans un autre mode de réalisation, la seconde piste de roulement est ménagée dans le corps du second élément.
- le dispositif d'amortissement comporte des butées de fin de course aptes à limiter le débattement angulaire relatif entre le premier élément et le second élément.
- la première et la seconde piste de roulement sont radialement en vis-à-vis.
- la lame élastique comporte une extrémité distale libre capable de se déplacer de manière à ce que la distance entre cette extrémité et l'axe X de rotation varie.
- le dispositif d'amortissement comporte :
   ∘ une pluralité de lames élastiques montées solidaires en rotation du premier élément ;
   ∘ une pluralité de paires de pistes de roulement comportant chacune une première piste de roulement portée par une lame élastique respective et une seconde piste de roulement portée par le second élément ; et
   ∘ une pluralité de corps roulants coopérant chacun avec une paire de pistes de roulement respective.
- les lames élastiques sont régulièrement réparties autour de l'axe de rotation X.
- les lames élastiques sont symétriques par rapport à l'axe de rotation X.

Selon un mode de réalisation, l'invention concerne un système de transmission de couple comportant un dispositif d'amortissement précité.

Selon un mode de réalisation, l'invention concerne un double volant amortisseur comportant une masse d'inertie primaire, une masse d'inertie secondaire et un dispositif d'amortissement précité, la masse d'inertie primaire formant l'un des premier et second éléments dudit dispositif d'amortissement et la masse d'inertie secondaire formant l'autre desdits premier et second éléments.

Selon un mode de réalisation, l'invention fournit également un véhicule automobile comportant un tel dispositif d'amortissement.

### Brève description des figures

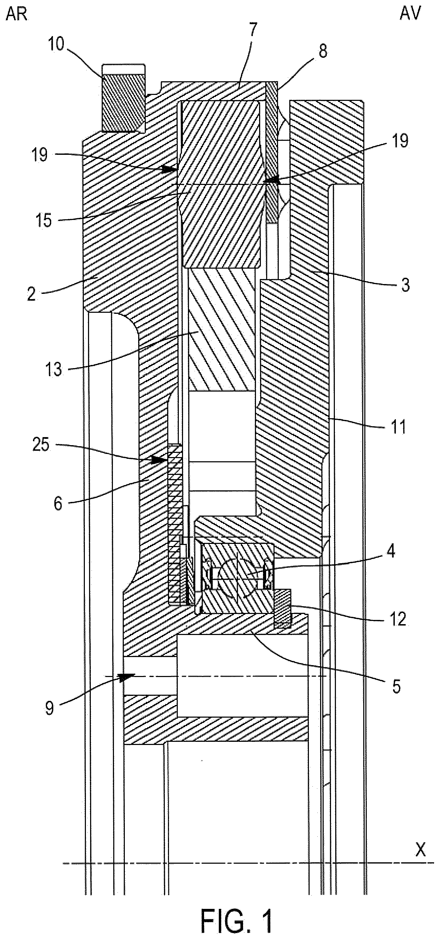

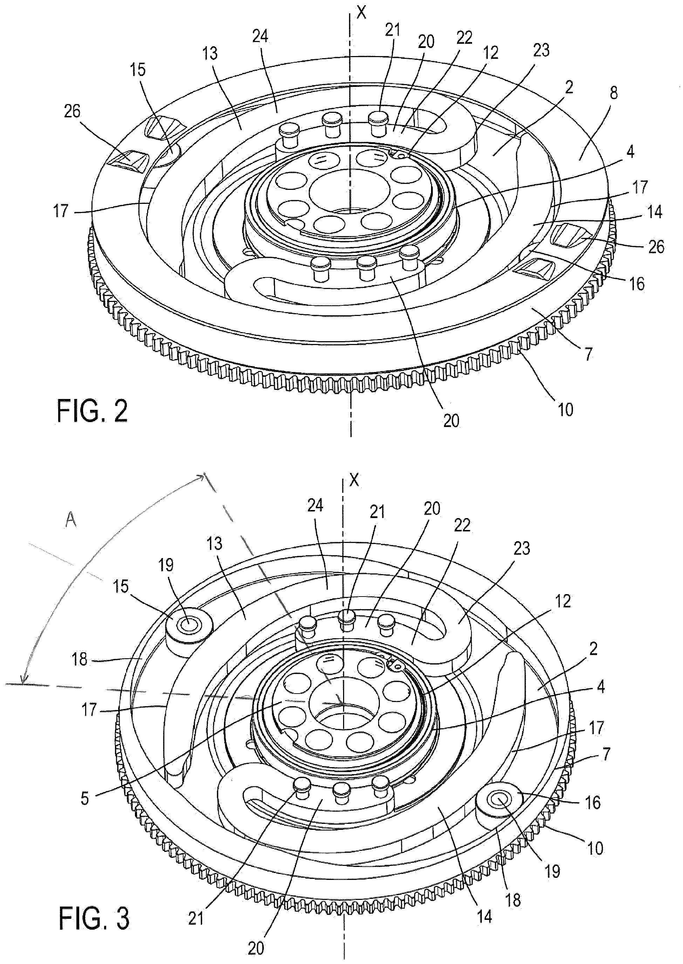

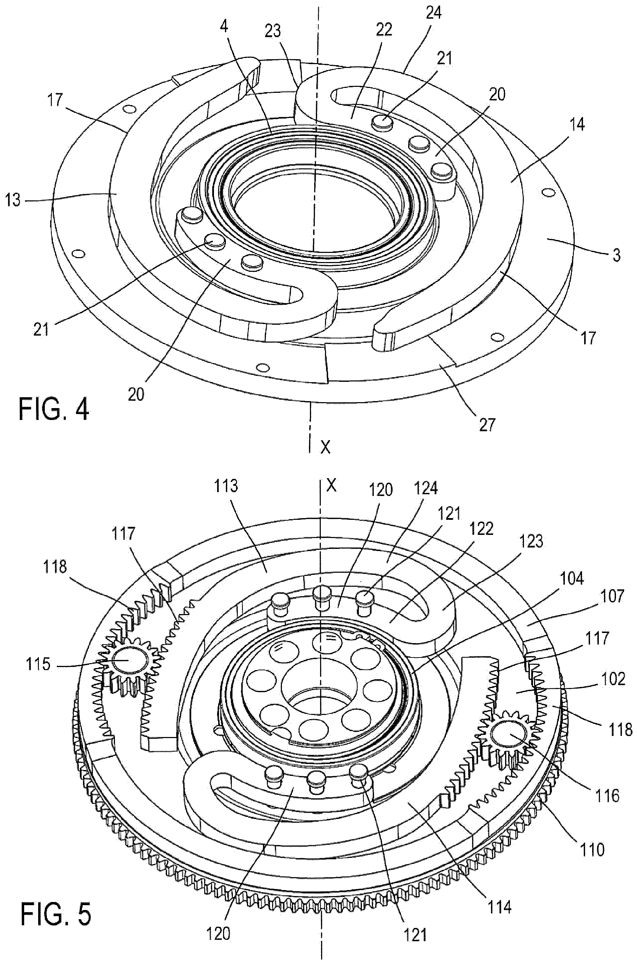

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une demi-vue en coupe d'un double volant amortisseur équipé d'un dispositif d'amortissement des vibrations selon un premier mode de réalisation.
- **La** **figure 2** est une vue partielle en perspective du double volant amortisseur de la figure 1 dans laquelle le volant secondaire n'a pas été représenté afin de permettre une visualisation des moyens élastiques d'amortissement.
- **La** **figure 3** est une vue partielle en perspective du double volant amortisseur de la figure 1 dans laquelle ni le volant secondaire ni le couvercle du volant primaire n'ont été représentés.
- **La** **figure 4** est une vue partielle en perspective représentant partiellement le double volant amortisseur de la figure 1 dans laquelle le volant primaire n'a pas été représenté.
- **La** **figure 5** est une vue en perspective d'une double volant amortisseur équipé d'un dispositif d'amortissement des vibrations selon un second mode de réalisation, dans laquelle ni le volant secondaire ni le couvercle du volant primaire n'ont été représentés.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du dispositif d'amortissement des vibrations. Par convention, l'orientation "radiale" est dirigée orthogonalement à l'axe X de rotation du dispositif d'amortissement déterminant l'orientation "axiale" et, de l'intérieur vers l'extérieur en s'éloignant dudit axe, l'orientation "circonférentielle" est dirigée orthogonalement à l'axe du dispositif d'amortissement et orthogonalement à la direction radiale. Les termes "externe" et "interne" sont utilisés pour définir la position relative d'un élément par rapport à un autre, par référence à l'axe X de rotation du dispositif d'amortissement, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par arrière et un élément destiné à être placé proche de la boîte de vitesses étant désigné par avant.

Le dispositif d'amortissement des vibrations est destiné à être disposé dans la chaîne de transmission d'un véhicule automobile, entre le moteur à explosion et la boîte de vitesses. Il peut notamment être intégré à un double volant amortisseur, à un mécanisme d'embrayage, à un embrayage de pontage d'un dispositif d'accouplement hydraulique ou à un disque d'embrayage.

Dans les figures et la description ci-dessous, le dispositif d'amortissement des vibrations est intégré dans un double volant amortisseur 1. Le premier élément sur lequel sont montées les lames est ici le volant d'inertie secondaire et le second élément est ici le volant d'inertie primaire.

En relation avec la figure 1, l'on observe que le double volant amortisseur 1 comprend un volant d'inertie primaire 2, destiné à être fixé en bout d'un vilebrequin d'un moteur à combustion interne, non représenté, et un volant d'inertie secondaire 3 qui est centré et guidé sur le volant d'inertie primaire 2 au moyen d'un palier 4, tel qu'un palier à roulement à billes. Le volant secondaire 3 est destiné à former le plateau de réaction d'un embrayage, non représenté, relié à l'arbre d'entrée d'une boîte de vitesse. Les volants d'inertie primaire 2 et secondaire 3 sont destinés à être montés mobiles autour d'un axe de rotation X et sont, en outre, mobiles en rotation l'un par rapport à l'autre autour dudit axe X.

Le volant primaire 2 comporte un moyeu 5 radialement interne supportant le palier 4, une portion annulaire 6 s'étendant radialement depuis le moyeu 5 et une portion cylindrique 7 s'étendant axialement, du côté opposé au moteur, depuis la périphérie externe de la portion annulaire 6. Par ailleurs, le volant primaire 2 comporte un couvercle annulaire 8 rapporté contre l'extrémité avant de la portion cylindrique 7 et définissant avec la portion annulaire 6 et la portion cylindrique 7, une chambre annulaire. Le volant primaire 2 est pourvue d'orifices 9 de passage de vis de fixation, destinés à la fixation du volant primaire 2 sur le vilebrequin du moteur. Le volant primaire 2 porte, sur sa périphérie extérieure, une couronne dentée 10 pour l'entraînement en rotation du volant primaire 2, à l'aide d'un démarreur.

Le moyeu 5 du volant primaire 2 comporte un épaulement servant à l'appui d'une bague interne du palier 4 et retenant ladite bague interne en direction du moteur. De même, le volant secondaire 3 comporte sur sa périphérie interne un épaulement servant à l'appui d'une bague externe du palier 4 et retenant ladite bague externe en direction opposée au moteur. Un anneau élastique 12 du type circlip est monté dans une gorge du moyeu 5 du volant primaire 2 de sorte à retenir la bague interne du palier 4 vers l'avant.

Le volant secondaire 3 comporte une surface annulaire plane 11, tournée du côté opposé au volant primaire 2, formant une surface d'appui pour une garniture de friction d'un disque d'embrayage, non représenté. Le volant secondaire 3 comporte, à proximité de son bord externe, des plots et des orifices, non représentés, servant au montage d'un couvercle d'embrayage.

Sur la figure 3, les moyens d'amortissement élastiques permettant de coupler en rotation les volants primaire 2 et secondaire 3 sont représentés. Les moyens d'amortissement élastiques comportent des lames élastiques 13, 14 fixées sur le volant secondaire 3 et des corps roulants 15, 16. Les corps roulant 15, 16 sont chacun interposés radialement entre une première piste de roulement 17 portée par une lame élastique 13, 14 et une seconde piste de roulement 18 portée par le volant primaire 2. Ici, le corps roulant est mobile sur un secteur angulaire A d'environ 60° par rapport au second élément.

Dans un mode de réalisation alternatif non représenté, la structure est inversée et les lames élastiques 13, 14 sont fixées sur le volant primaire 2 alors que les corps roulants 15, 16 sont interposés radialement entre une première piste de roulement 17 portée par une lame élastique 13, 14 et une seconde piste de roulement portée par le volant secondaire 3.

Entre la lame élastique 13, 14 et le corps roulant, le couple transmis entre les volants 2, 3 se décompose en efforts radiaux et en efforts circonférentiels. Des forces de réaction permettent de transmettre le couple d'un volant à l'autre. Les efforts radiaux permettent de faire fléchir la lame et les efforts circonférentiels permettent au corps roulant de se déplacer sur les pistes de roulement 17, 18 et de transmettre le couple.

Lorsque le couple transmis entre le volant primaire 2 et le volant secondaire 3 varie, les efforts radiaux s'exerçant entre la lame élastique 17, 18 et le corps roulant 15, 16 varient et la flexion de la lame élastique 13, 14 est modifiée. La modification de la flexion de la lame est accompagnée d'un déplacement du corps roulant 15, 16 sur les deux pistes de roulement 17, 18 sous l'action des efforts circonférentiels.

Ainsi, chaque corps roulant 15, 16 roule contre l'une et l'autre des deux pistes de roulement associées 17, 18 et se déplace par rapport au volant primaire 2 et au volant secondaire 3 selon deux directions opposées. Les corps roulants 15, 16 permettent ainsi un débattement relatif entre les volants primaire 2 et secondaire 3.

Par ailleurs, les pistes de roulement 17, 18 présentent des profils agencés de telle sorte que, lorsque le couple transmis augmente, les corps roulants 15, 16 exercent chacun un effort de flexion sur leur lame élastique 13, 14 respective entraînant un rapprochement de l'extrémité distale libre des lames élastiques vers l'axe X et une rotation relative entre les premier et second éléments telle que les volants primaire 2 et secondaire 3 s'écartent de leur position relative de repos.

Les profils des pistes de roulement 17, 18 sont donc tels que les corps roulants 15, 16 exercent sur leur lame élastique 13, 14 associée un effort de flexion ayant une composante radiale et une composante circonférentielle.

Les lames élastiques exercent sur les corps roulants 15, 16 une force de rappel ayant une composante circonférentielle qui tend à faire tourner les corps roulants 15, 16 selon un sens de rotation opposé et à rappeler par conséquent les volants primaire 2 et secondaire 3 vers leur position relative de repos et une composante radiale dirigée vers l'extérieur de sorte à maintenir les corps roulants 15, 16 en contact avec leur pistes de roulement 17, 18 respective.

Selon un mode de réalisation, lorsque les volants primaire 2 et secondaire 3 sont dans leur position relative de repos, illustrée notamment sur la figure 3, les lames élastiques 13, 14 sont précontraintes radialement vers l'axe X de sorte à exercer une force de réaction, dirigée radialement vers l'extérieur, de sorte à maintenir les corps roulants 15, 16 en contact avec la lame élastique 13, 14, d'une part, et avec la seconde piste de roulement 18 portée par le volant primaire 2, d'autre part. Un telle précontrainte des lames élastiques 13, 14 dans la position relative de repos permet d'assurer un positionnement relatif précis des corps roulants 13, 14.

Les profils des pistes de roulement 17, 18 peuvent indifféremment être agencés de telle sorte que la courbe caractéristique de transmission du couple en fonction du débattement angulaire soit symétrique ou non par rapport à la position de repos. Selon un mode de réalisation avantageux, le débattement angulaire pourra être plus important selon le sens direct que selon le sens rétro.

Dans le mode de réalisation des figures 1 à 4, les corps roulants 15, 16 sont des rouleaux cylindriques. Les rouleaux cylindriques peuvent être pleins ou creux. Il est également possible d'utiliser des corps roulants 15, 16 ayant d'autres formes, et notamment des billes, des rouleaux coniques ou autres. Les corps roulants 15, 16 peuvent notamment être réalisés en acier à roulement.

Comme représenté sur les figures 1 et 2, les corps roulants 15, 16 sont disposés dans la chambre annulaire définie entre le couvercle 8 et la portion annulaire 6 du volant primaire 2. Ainsi, les corps roulants 15, 16 sont maintenus axialement par deux parois latérales du volant primaire 2 qui sont respectivement formées par la portion annulaire 6 du volant primaire 2 et par le couvercle 8 du volant primaire 2.

Par ailleurs, comme représenté par exemple sur les figures 1 et 3, chaque extrémité des rouleaux cylindriques est équipée d'une protubérance 19 faisant saillie axialement et permettant de limiter les surfaces de frottement entre les extrémités des rouleaux cylindriques et le volant primaire 2.

Les secondes pistes de roulement 18 sont ménagées dans la surface intérieure de la portion cylindrique 7 du volant primaire 2. Les secondes pistes de roulement 18 peuvent être réalisées par moulage ou par usinage du volant primaire 2 ou être réalisée sur une pièce rapportée sur le volant primaire 2.

Les secondes pistes de roulement 18 présentent, lorsqu'elles sont observées suivant l'axe de rotation (X) une forme arquée dont la concavité est du côté de l'axe de rotation X. Ainsi, lorsque les corps roulants 15, 16 s'éloignent, dans un sens ou dans l'autre, par rapport à leur position de repos, illustrée sur la figure 3, les corps roulants 15, 16 se rapprochent de l'axe X.

Les lames élastiques 13, 14 sont régulièrement réparties autour de l'axe X et sont symétriques par rapport à l'axe X de manière à garantir l'équilibre du double volant amortisseur 1.

Par ailleurs, les lames élastiques 13, 14 sont par exemple réalisées dans un acier à ressort.

On observe sur la figure 4 que chaque lame élastique 15, 16 est fixée de manière indépendante sur le volant secondaire 3. Chaque lame élastique 15, 16 comporte une portion de fixation 20 fixée sur le volant secondaire 3 par l'intermédiaire d'une pluralité de rivets 21, trois dans le mode de réalisation représenté. La portion de fixation 21 est prolongée par une portion élastiquement déformable.

La portion élastiquement déformable comporte ici un brin interne 22, un brin externe 24 et une portion coudée 23 reliant le brin interne 22 et le brin externe 24. La portion coudée 23 présente un angle d'environ 180° de sorte qu'une portion du brin interne 22 se situe radialement entre une portion du brin externe 24 et l'axe X. En d'autres termes, la portion élastiquement déformable comporte deux régions radialement décalées l'une de l'autre et séparées par un espace radial.

Le brin interne 22 se développe circonférentiellement autour du palier 4. Le brin externe 24 se développe circonférentiellement depuis la portion coudée 23 jusqu'à une extrémité libre de la lame élastique 13, 14. Le brin externe 24 se développe circonférentiellement sur un angle compris entre 120 et 180°.

Par ailleurs, les premières pistes de roulement 17 sont ménagées sur la surface extérieure des lames élastiques 13, 14. Les pistes de roulement 17 peuvent être réalisées directement dans le corps des lames élastiques 13, 14 ou être réalisée sur une pièce qui est rapportée sur la lame élastique 13, 14.

Bien que l'invention soit décrite ci-dessus en liaison avec des lames élastiques 13, 14 présentant un brin interne 22 et un brin externe 24 reliés par une portion coudée 23, il est bien évident qu'elle n'y est nullement limitée et qu'il sera notamment possible d'utiliser des lames élastiques 13, 14 qui présentent des formes différentes ou dont la fixation soit assurée de manière différente. De même, il sera également possible de prévoir des moyens élastiques d'amortissement ne comportant qu'une seule lame élastique ou au contraire plus de deux lames élastiques.

Selon un autre mode de réalisation, non représenté, il est possible de prévoir des moyens de phasage permettant de maintenir une position relative constante entre les corps roulants 15, 16. De tels moyens de phasage peuvent notamment être constitués d'une cage permettant de maintenir un espace constant entre les corps roulants 15, 16.

Selon un mode de réalisation non représentés, le dispositif amortissement peut également comporter plusieurs corps roulants 15, 16 disposés entre chaque paire de piste de roulement 17, 18. Les corps roulants sont dans ce cas maintenus espacés les uns des autres par une cage.

En se reportant de nouveau à la figure 1, on constate que le double volant amortisseur 1 comporte également un ensemble de frottement 25 agencé pour exercer un couple résistant entre le volant primaire 2 et le volant secondaire 3 lors de leur débattement relatif de manière à dissiper l'énergie accumulée dans les lames élastiques 13, 14. Un tel ensemble de frottement comporte typiquement une première rondelle de frottement apte à être à être entraînée en rotation par l'un des volants primaire 2 et secondaire 3, une seconde rondelle de frottement apte à être entraînée en rotation par l'autre des volants primaire 2 et secondaire 3, et une rondelle élastique de type « Belleville » agencée pour exercer un effort de poussée de la première rondelle de frottement contre la seconde.

Par ailleurs, le double volant amortisseur 1 est également équipé de butées de fin de course aptes à limiter le débattement angulaire relatif entre les volants primaire 2 et secondaire 3. De telles butées permettent de transmettre un couple entre le volant primaire 2 et le volant secondaire 3, en cas de destruction des moyens d'amortissement, et/ou permettent de protéger les moyens d'amortissement en cas de transmission d'un sur-couple résultant de conditions d'utilisation limites ou d'un dysfonctionnement du groupe motopropulseur.

Les butées de fin de course comportent, d'une part, des bossages 26, représentés sur la figure 2, formés dans le couvercle 8 du volant primaire 2 et, d'autre part, des protubérances 27, représentés sur la figure 4, formés dans la surface arrière du volant secondaire 3. Dans le mode de réalisation, le volant primaire 2 comporte deux paires de deux bossages 26 disposées de manière diamétralement opposée. Le volant secondaire 3 comporte deux protubérances 27 diamétralement opposées qui sont chacune disposées circonférentiellement entre les deux paires de deux bossages 26.

En cas de rotation relative du volant secondaire 3 par rapport au volant primaire 2 atteignant un angle limite par rapport à la position relative de repos, les protubérances 27 viennent respectivement en appui contre un bossage 26 de l'une et l'autre des deux paires de bossages 26.

La figure 5 représente un autre mode de réalisation du dispositif d'amortissement des vibrations. Les éléments analogues ou identiques à ceux du mode de réalisation des figures 1 à 4 portent un chiffre de référence augmenté de 100.

Dans ce mode de réalisation, les corps roulants sont des pignons 115, 116 ou roues dentées qui engrènent dans des dentures ménagées dans les pistes de roulement 117, 118. Un tel mode de réalisation est avantageux en ce qu'il permet d'empêcher les mouvements de glissement des pignons 115, 116 par rapport aux pistes de roulements 117, 118 portées par le volant primaire 2 et la lame élastique 113, 114. Ainsi, un positionnement précis, symétrique et répétable des corps roulants 115, 116 est garanti. Ainsi, dans ce mode de réalisation, les deux galets peuvent être maintenus de façon diamètralement opposée efficacement.

Par ailleurs, la présence de dentures permet d'orienter plus librement les pistes de roulement par rapport au galet car les contacts entre le galet et les pistes de roulements ne doivent pas nécessairement être antagonistes. Il y a ainsi plus de géométries possibles pour orienter les pistes de roulement.

Les dentures présentent un profil en développante de cercle. Selon un mode de réalisation, l'angle de pression α des dentures est compris entre 20 et 40°. De tels angles de pression permettent d'obtenir des dentures particulièrement résistantes.

Dans le mode de réalisation représenté, les dentures des pignons 115, 116 et des pistes de roulement 117, 118 sont des dentures droites, c'est-à-dire composées de dents dont la génératrice est une droite parallèle à l'axe de rotation du pignon.

Selon un autre mode de réalisation, les dentures des pignons 115, 116 et des pistes de roulement 117, 118 sont des dentures à chevron, c'est-à-dire composées de deux dentures hélicoïdales ayant chacune une génératrice de dent formée par une ligne hélicoïdale et tournant selon des sens contraires. Des dentures à chevron sont particulièrement avantageuses en ce qu'elles permettent d'assurer un maintien axial des pignons 115, 116 par rapport aux pistes de roulement 117, 118.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif d'amortissement des vibrations, notamment de torsion, pour une chaîne de transmission de véhicule automobile comportant :
- un premier élément (3) et un second élément (2, 102) mobiles, en rotation autour d'un axe de rotation X ; et
- des moyens élastiques d'amortissement accouplant le premier élément (3) et le second élément (2, 102) de manière à permettre une transmission de couple avec amortissement des vibrations entre le premier élément (3) et le second élément (2, 102), cette transmission de couple avec amortissement étant accompagnée d'une rotation relative entre le premier élément (3) et le second élément (2, 102); lesdits moyens élastiques d'amortissement comportant au moins une lame élastique (13, 14, 113, 114) montée solidaire en rotation du premier élément (3) ; le dispositif d'amortissement étant **caractérisé en ce qu'**il comporte en outre :
- un corps roulant mobile par rapport au second élément pour pouvoir accomplir un trajet curviligne sur au moins un secteur angulaire (A) prédéterminé, le déplacement curviligne du corps roulant par rapport au second élément étant accompagné d'un déplacement du corps roulant sur la lame élastique en la faisant fléchir.

2. Dispositif d'amortissement selon la revendication 1, dans lequel le trajet curviligne du corps roulant par rapport au second élément comporte une composante géométrique circonférentielle.

3. Dispositif d'amortissement selon l'une quelconque des revendications 1 à 2, dans lequel une première et une seconde pistes de roulement (17, 18, 117, 118) sont respectivement portées par la lame élastique (13, 14, 113, 114) et par le second élément (2) ; et le corps roulant (15, 16, 115, 116) est agencé pour se déplacer sur la première et la seconde pistes de roulement (17, 18, 117, 118) pour permettre un débattement angulaire entre le premier élément (3) et le second élément (2, 102) ; les première et seconde pistes de roulement (17, 18, 117, 118) étant agencées de telle sorte que, dans une position angulaire relative entre le premier élément (3) et le second élément (2, 102) différente d'une position relative de repos, le corps roulant (15, 16, 115, 116) exerce un effort de flexion sur la lame élastique (13, 14, 113, 114) produisant une force de réaction contraire de la lame élastique (13, 14, 113, 114) sur le corps roulant (15, 16, 115, 116), cette force de réaction présentant une composante circonférentielle apte à rappeler lesdits premier et second éléments (2, 102, 3) vers ladite position relative de repos.

4. Dispositif d'amortissement selon la revendication 3, dans lequel les première et seconde pistes de roulement (17, 18, 117, 118) sont agencées en vis-à-vis.

5. Dispositif d'amortissement selon l'une quelconque des revendications 3 à 4, dans lequel la première piste de roulement (17, 117) est située radialement à l'intérieur de la seconde piste de roulement (18, 118).

6. Dispositif d'amortissement selon l'une quelconque des revendications 3 à 5, dans lequel les première et seconde pistes de roulement (17, 18, 117, 118) sont agencées de telle sorte que, dans une position angulaire relative entre le premier élément (3, 103) et le second élément (2) différente de la position relative de repos, le corps roulant (15, 16) exerce un effort de flexion sur la lame élastique (13, 14, 113, 114) comportant une composante radiale produisant une force de réaction contraire de la lame élastique comportant une composante radiale dirigée vers l'extérieur apte à maintenir le corps roulant (15, 16) en contact avec la première et la seconde pistes de roulement (17, 18, 117, 118).

7. Dispositif d'amortissement selon l'une quelconque des revendications 3 à 6, dans lequel le second élément (2) comporte des parois latérales (6, 8) bordant la seconde piste de roulement (18, 118) et le corps roulant (15, 16, 115, 116) afin de maintenir ledit corps roulant axialement.

8. Dispositif d'amortissement selon l'une quelconque des revendications 1 à 7, dans lequel le corps roulant (15, 16) est un rouleau cylindrique dont chaque extrémité est équipée d'une protubérance (19) faisant saillie axialement selon l'axe de révolution du rouleau cylindrique.

9. Dispositif d'amortissement selon l'une quelconque des revendications 3 à 7, dans lequel la première et la seconde pistes de roulement (117, 118) comportent chacune une denture et dans lequel le corps roulant (115, 116) est un pignon comportant une denture engrenant avec les dentures de la première et de la seconde pistes de roulement (117, 118).

10. Dispositif d'amortissement selon l'une quelconque des revendications 1 à 9, dans lequel la lame élastique (13, 14, 113, 114) comporte une portion de fixation (20, 120) sur le premier élément (3) et une portion élastique comportant un brin interne (22, 122), un brin externe (24, 124) et une portion coudée (23, 123) reliant le brin interne (22, 122) et le brin externe (24, 124).

11. Dispositif d'amortissement selon l'une quelconque des revendications 3 à 7, dans lequel la seconde piste de roulement (18, 118) est ménagée sur une pièce rapportée sur le second élément (2).

12. Dispositif d'amortissement selon l'une quelconque des revendications 1 à 11, comportant des butées de fin de course (26, 27) aptes à limiter le débattement angulaire relatif entre le premier élément (3) et le second élément (2, 102).

13. Dispositif d'amortissement selon l'une quelconque des revendications 1 à 12, comportant :
- une pluralité de lames élastiques (13, 14, 113, 114) montées solidaires en rotation du premier élément (3) ;
- une pluralité de paires de pistes de roulement comportant chacune une première piste de roulement (17, 117) portée par une lame élastique (13, 14, 113, 114) respective et une seconde piste de roulement (18, 118) portée par le second élément (2, 102); et
- une pluralité de corps roulants (15, 16, 115, 116) coopérant chacun avec une paire de pistes de roulement respective.

14. Dispositif d'amortissement selon l'une quelconque des revendications 1 à 3, dans lequel le secteur angulaire prédéterminé est supérieur à 20°, notamment supérieur à 40°, ou supérieur à 60° ou 90°.

## Patentansprüche

1. Vorrichtung zur Dämpfung der Schwingungen, insbesondere der Torsionsschwingungen, für einen Antriebsstrang eines Kraftfahrzeugs, die Folgendes umfasst:
- ein erstes Element (3) und ein zweites Element (2, 102), die in Drehung um eine Rotationsachse X beweglich sind, und
- elastische Dämpfungsmittel, die das erste Element (3) und das zweite Element (2, 102) derart koppeln, dass eine Momentübertragung mit Dämpfung der Schwingungen zwischen dem ersten Element (3) und dem zweiten Element (2, 102) erlaubt wird, wobei diese Momentübertragung mit Dämpfung von einer relativen Drehung zwischen dem ersten Element (3) und dem zweiten Element (2, 102) begleitet ist; wobei die elastischen Dämpfungsmittel mindestens eine elastische Klinge (13, 14, 113, 114) umfassen, die fest in Drehung verbunden mit dem ersten Element (3) montiert ist; Dämpfungsvorrichtung **dadurch gekennzeichnet, dass** sie außerdem Folgendes umfasst:
- einen rollenden Körper, der in Bezug auf das zweite Element beweglich ist, um einen krummlinigen Verlauf auf mindestens einem vorbestimmten Winkelsektor (A) zu vollbringen, wobei die krummlinige Bewegung des rollenden Körpers in Bezug zu dem zweiten Element von einer Bewegung des rollenden Körpers auf der elastischen Klinge begleitet ist, wobei sie gebogen wird.

2. Dämpfungsvorrichtung nach Anspruch 1, wobei der krummlinige Verlauf des rollenden Körpers in Bezug auf das zweite Element eine umfängliche geometrische Komponente umfasst.

3. Dämpfungsvorrichtung nach einem der Ansprüche 1 bis 2, wobei eine erste und eine zweite Laufbahn (17, 18, 117, 118) jeweils von der elastischen Klinge (13, 14, 113, 114) und von dem zweiten Element (2) getragen werden, und der rollende Körper (15, 16, 115, 116) eingerichtet ist, um sich auf der ersten und der zweiten Laufbahn (17, 18, 117, 118) zu bewegen, um ein winkeliges Ausschlagen zwischen dem ersten Element (3) und dem zweiten Element (2, 102) zu erlauben; wobei die erste und die zweite Laufbahn (17, 18, 117, 118) derart eingerichtet sind, dass der rollende Körper (15, 16, 115, 116) in einer relativen Winkelposition zwischen dem ersten Element (3) und dem zweiten Element (2, 102), die von einer relativen Ruheposition unterschiedlich ist, eine Biegekraft auf die elastische Klinge (13, 14, 113, 114) ausübt, die eine Gegenreaktionskraft der elastischen Klinge (13, 14, 113, 114) auf den rollenden Körper (15, 16, 115, 116) erzeugt, wobei diese Reaktionskraft eine umfängliche Komponente aufweist, die geeignet ist, um das erste und das zweite Element (2, 102, 3) zu der relativen Ruheposition zurückzustellen.

4. Dämpfungsvorrichtung nach Anspruch 3, wobei die erste und die zweite Laufbahn (17, 18, 117, 118) in Gegenüberlage eingerichtet sind.

5. Dämpfungsvorrichtung nach einem der Ansprüche 3 bis 4, wobei die erste Laufbahn (17, 117) radial im Inneren der zweiten Laufbahn (18, 118) liegt.

6. Dämpfungsrichtung nach einem der Ansprüche 3 bis 5, wobei die erste und die zweite Laufbahn (17, 18, 117, 118) derart eingerichtet sind, dass der rollende Körper (15, 16) in einer relativen Winkelposition zwischen dem ersten Element (3, 103) und dem zweiten Element (2), die von der relativen Ruheposition unterschiedlich ist, eine Biegekraft auf die elastische Klinge (13, 14, 113, 114) ausübt, die eine radiale Komponente umfasst, die eine Gegenreaktionskraft der elastischen Klinge erzeugt, die eine radiale Komponente umfasst, die nach außen gerichtet ist, die geeignet ist, um den rollenden Körper (15, 16) in Berührung mit der ersten und der zweiten Laufbahn (17, 18, 117, 118) zu halten.

7. Dämpfungsvorrichtung nach einem der Ansprüche 3 bis 6, wobei das zweite Element (2) Seitenwände (6, 8) umfasst, die die zweite Laufbahn (18, 118) und den rollenden Körper (15, 16, 115, 116) begrenzen, um den rollenden Körper axial zu halten.

8. Dämpfungsvorrichtung nach einem der Ansprüche 1 bis 7, wobei der rollende Körper (15, 16) eine zylindrische Walze ist, von welcher jedes Ende mit einem Vorsprung (19) ausgestattet ist, der axial gemäß der Rotationsachse der zylindrischen Walze vorragt.

9. Dämpfungsvorrichtung nach einem der Ansprüche 3 bis 7, wobei die erste und die zweite Laufbahn (117, 118) jeweils eine Verzahnung umfassen, und wobei der rollende Körper (115, 116) ein Ritzel ist, das eine Verzahnung umfasst, die in die Verzahnungen der ersten und der zweiten Laufbahn (117, 118) eingreift.

10. Dämpfungsvorrichtung nach einem der Ansprüche 1 bis 9, wobei die elastische Klinge (13, 14, 113, 114) einen Befestigungsabschnitt (20, 120) auf dem ersten Element (3) umfasst, und einen elastischen Abschnitt, der einen inneren Strang (22, 122), einen äußeren Strang (24, 124) und einen abgewinkelten Abschnitt (23, 123), der den inneren Strang (22, 122) und den äußeren Strang (24, 124) verbindet, umfasst.

11. Dämpfungsvorrichtung nach einem der Ansprüche 3 bis 7, wobei die zweite Laufbahn (18, 118) auf einem angefügten Teil auf dem zweiten Element (2) eingerichtet ist.

12. Dämpfungsvorrichtung nach einem der Ansprüche 1 bis 11, die Endanschläge (26, 27) umfasst, die geeignet sind, um das relative winkelige Ausschlagen zwischen dem ersten Element (3) und dem zweiten Element (2, 102) zu begrenzen.

13. Dämpfungsvorrichtung nach einem der Ansprüche 1 bis 12, die Folgendes umfasst:
- eine Vielzahl elastischer Klingen (13, 14, 113, 114) die fest in Drehung mit dem ersten Element (3) verbunden montiert sind;
- eine Vielzahl von Laufbahnpaaren, die jeweils eine erste Laufbahn (17, 117), die von einer jeweiligen elastischen Klinge (13, 14, 113, 114) getragen wird, und eine zweite Laufbahn (18, 118), die von dem zweiten Element (2, 102) getragen wird, umfassen, und
- eine Vielzahl rollender Körper (15, 16, 115, 116) die jeweils mit einem jeweiligen Laufbahnpaar zusammenwirken.

14. Dämpfungsvorrichtung nach einem der Ansprüche 1 bis 3, wobei der vorbestimmte Winkelsektor größer ist als 20°, insbesondere größer als 40° oder größer als 60° oder 90°.

## Claims

1. Device for dampening vibrations, in particular torsional vibrations, for a drive train of an automotive vehicle, comprising:
- a first element (3) and a second element (2, 102) which are mobile in rotation about an axis of rotation X; and
- resilient dampening means coupling the first element (3) and the second element (2, 102) so as to permit torque transmission with vibration dampening between the first element (3) and the second element (2, 102), said torque transmission with dampening being accompanied by a relative rotation between the first element (3) and the second element (2, 102); said resilient dampening means comprising at least one resilient blade (13, 14, 113, 114) mounted fixedly in terms of rotation on the first element (3); the device for dampening being **characterized in that** it further comprises:
- a rolling body which is mobile relative to the second element so as to be able to execute a curvilinear trajectory over at least one predetermined angular sector (A), the curvilinear displacement of the rolling body relative to the second element being accompanied by a displacement of the rolling body on the resilient blade, causing said resilient blade to flex.

2. Device for dampening according to Claim 1, wherein the curvilinear trajectory of the rolling body relative to the second element has a circumferential geometric component.

3. Device for dampening according to any one of Claims 1 to 2, wherein a first and a second raceway (17, 18, 117, 118) are respectively borne by the resilient blade (13, 14, 113, 114) and by the second element (2); and the rolling body (15, 16, 115, 116) is arranged so as to be displaced on the first and second raceways (17, 18, 117, 118) to permit an angular displacement between the first element (3) and the second element (2, 102); the first and the second raceways (17, 18, 117, 118) being arranged such that in a relative angular position between the first element (3) and the second element (2, 102) which is different from a relative resting position, the rolling body (15, 16, 115, 116) exerts a bending force on the resilient blade (13, 14, 113, 114), producing an opposing reaction force of the resilient blade (13, 14, 113, 114) on the rolling body (15, 16, 115, 116), this reaction force having a circumferential component capable of returning said first and second elements (2, 102, 3) into said relative resting position.

4. Device for dampening according to Claim 3, wherein the first and second raceways (17, 18, 117, 118) are arranged opposite one another.

5. Device for dampening according to any one of Claims 3 to 4, wherein the first raceway (17, 117) is located radially inside the second raceway (18, 118).

6. Device for dampening according to any one of Claims 3 to 5, wherein the first and second raceways (17, 18, 117, 118) are arranged such that in a relative angular position between the first element (3, 103) and the second element (2), which is different from the relative resting position, the rolling body (15, 16) exerts on the resilient blade (13, 14, 113, 114) a bending force comprising a radial component, producing an opposing reaction force of the resilient blade comprising an outwardly oriented radial component, capable of keeping the rolling body (15, 16) in contact with the first and second raceways (17, 18, 117, 118).

7. Device for dampening according to any one of Claims 3 to 6, wherein the second element (2) comprises lateral walls (6, 8) bordering the second raceway (18, 118) and the rolling body (15, 16, 115, 116) in order to retain said rolling body axially.

8. Device for dampening according to any one of Claims 1 to 7, wherein the rolling body (15, 16) is a cylindrical roller, each end thereof being provided with a protuberance (19) projecting axially along the axis of revolution of the cylindrical roller.

9. Device for dampening according to any one of Claims 3 to 7, wherein the first and second raceways (117, 118) each comprise a toothing and wherein the rolling body (115, 116) is a pinion comprising a toothing which meshes with the toothings of the first and second raceways (117, 118) .

10. Device for dampening according to any one of Claims 1 to 9, wherein the resilient blade (13, 14, 113, 114) comprises a region (20, 120) for fixing to the first element (3) and a resilient region comprising an internal section (22, 122), an external section (24, 124) and a bent region (23, 123) connecting the internal section (22, 122) and the external section (24, 124).

11. Device for dampening according to any one of Claims 3 to 7, wherein the second raceway (18, 118) is formed on a part connected to the second element (2).

12. Device for dampening according to any one of Claims 1 to 11, comprising limit stops (26, 27) capable of limiting the relative angular displacement between the first element (3) and the second element (2, 102).

13. Device for dampening according to any one of Claims 1 to 12, comprising:
- a plurality of resilient blades (13, 14, 113, 114) mounted fixedly in terms of rotation on the first element (3) ;
- a plurality of pairs of raceways, each comprising a first raceway (17, 117) borne by one respective resilient blade (13, 14, 113, 114) and a second raceway (18, 118) borne by the second element (2, 102); and
- a plurality of rolling bodies (15, 16, 115, 116) each cooperating with one respective pair of raceways.

14. Device for dampening according to any one of Claims 1 to 3, wherein the predetermined angular sector is greater than 20º, in particular greater than 40º, or greater than 60º or 90º.
